# EUROPÄISCHE PATENTANMELDUNG

(11) **EP 2 826 639 A1**
(43) Veröffentlichungstag der Anmeldung: **21.01.2015**
(21) Anmeldenummer: 14002496.9
(22) Anmeldetag: 18.07.2014
(51) Int. Cl.: B60B 1/00, B60B 1/04, B60B 5/02, B60B 21/06, B60B 1/02, B60B 25/00, B60B 25/02

(54) **Systemlaufrad für ein Fahrrad**

(30) Priorität: 19.07.2013 DE 102013012101
(71) Anmelder: Kübler, Matthias, 73730 Esslingen (DE)
(72) Erfinder: Kübler, Matthias, 73730 Esslingen (DE)
(74) Vertreter: Kocher, Mark Werner

(57) **Zusammenfassung**

Die Erfindung betrifft ein Systemlaufrad für ein Fahrrad, mit einer Felge (2; 77) und mit einem Nabenkörper (29; 81), der in einem Zentrum der Felge (2; 77) angeordnet ist, sowie mit einer Speichenanordnung (6; 74), die die Felge (2; 77) mit dem Nabenkörper (29; 81) verbindet. Erfindungsgemäß ist vorgesehen, dass die Speichenanordnung (6; 74) aus mehreren stoffschlüssig zu Speichen (14) verbundenen Fasersträngen (40; 73) gebildet ist, die jeweils an einem ersten und an einem zweiten freien Endabschnitt (16; 72) mit der Felge (2; 77) verbunden sind und die jeweils mit einem Mittenabschnitt abschnittsweise an einer Nabenkupplung (15; 93) anliegen, wobei die Nabenkupplung (15; 93) für eine Kraftübertragung zwischen den Fasersträngen (40; 73) und dem Nabenkörper (29; 81) ausgebildet ist.

## Beschreibung

Die Erfindung betrifft ein Systemlaufrad für ein Fahrrad, mit einer Felge und mit einem Nabenkörper, der in einem Zentrum der Felge angeordnet ist, sowie mit einer Speichenanordnung, die die Felge mit dem Nabenkörper verbindet.

Aus der WO 2010/138557 A1 ist eine Carbonfelge für ein Fahrrad bekannt, bei der sich einzelne Speichen ausgehend von einem Nabenkörper bis zu einer Felge erstrecken und durch Ausnehmungen in einen Hohlraum der Felge geführt sind, um dort an einer Inneroberfläche der Felge befestigt zu werden. Für eine Befestigung am Nabenkörper sind die Speichen in einem radial innenliegenden Bereich mit einer vergrößerten Kontaktfläche ausgestattet, die für eine stoffschlüssige Befestigung an einem umlaufenden Bund des Nabenkörpers ausgebildet ist. Um eine Festlegung der Speichen an der Felge zu ermöglichen ist diese zumindest zweiteilig ausgebildet, wobei die zumindest zwei Felgenteile nach Anbringung der Speichen stoffschlüssig miteinander verbunden werden.

Die Aufgabe der Erfindung besteht darin, ein Systemlaufrad für ein Fahrrad bereitzustellen, bei dem eine vereinfachte Aufbauweise mit einer höheren Festigkeit und einem geringeren Gewicht gepaart ist.

Diese Aufgabe wird für ein Systemlaufrad der eingangs genannten Art mit den Merkmalen des Anspruchs 1 gelöst. Hierbei ist vorgesehen, dass die Speichenanordnung aus mehreren stoffschlüssig zu Speichen verbundenen Fasersträngen gebildet ist, die jeweils an einem ersten und an einem zweiten freien Endabschnitt mit der Felge verbunden sind und die jeweils mit einem Mittenabschnitt abschnittsweise an einer Nabenkupplung anliegen, wobei die Nabenkupplung für eine Kraftübertragung zwischen den Fasersträngen und dem Nabenkörper ausgebildet ist.

Durch die Anlage des Mittenabschnitts der Faserstränge an der Nabenkupplung ist ein vorteilhafter Kraftfluss in der Speichenanordnung gewährleistet, da die im Einsatz des Systemlaufrads an einem Fahrrad in den Speichen auftretenden Zugkräfte durch die abschnittsweise Anlage der Faserstränge an der Nabenkupplung großflächig in Richtung des Nabenkörpers abgeleitet werden können. Ferner ist vorteilhaft, dass die Faserstränge im Bereich der Nabenkupplung zumindest nahezu vollständig, insbesondere vollständig, unterbrechungsfrei geführt sind, so dass Spannungsspitzen zwischen den Speichen und der Nabenkupplung vermieden werden, wie sie bei Fasersträngen auftreten würden, deren freie Enden im Bereich der Nabenkupplung angeordnet sind. Bei den Fasersträngen wie auch bei den übrigen Fasermaterialien, die für das Systemlaufrad verwendet werden, kann es sich insbesondere um Carbonfasern, Metalldrähte, Kunstfasern wie beispielsweise Aramidfasern, Glasfasern, Naturfasern wie beispielsweise Hanffasern oder Mischungen derartiger Fasern handeln, die je nach Einsatzgebiet am Systemlaufrad als langgestreckte Faserstränge oder als durch Weben, Spinnen, Stricken oder Wirken zu einem Faserverbund gefügte Faserstrukturen eingesetzt werden können. Bei einer vorteilhaften Ausführungsform erstreckt sich zumindest ein überwiegender Teil der Fasern durchgängig, insbesondere einstückig, vom ersten freien Endabschnitt bis zum zweiten freien Endabschnitt, um einen vorteilhaften Kraftfluss zu ermöglichen. Bei einer alternativen Ausführungsform werden die Faserstränge durch Faserabschnitt gebildet, die kürzer als die Gesamtlänge des Faserstrangs sind und die sich vorzugsweise längs des Verlaufs des Faserstrangs erstrecken. Als Faserstrang im Sinne der Patentanmeldung kann auch ein langgestreckter Abschnitt eines Vollmaterials, beispielsweise ein Blechstreifen, angesehen werden.

Vorteilhafte Weiterbildungen der Erfindung sind Gegenstand der Unteransprüche.

Zweckmäßig ist es, wenn die Nabenkupplung als Aufnahme für einen Lagerring oder einen Lagerhalter eines Achslagers und/oder als Komponententräger für eine krafteinleitende Komponente, insbesondere für eine Bremsscheibe, für ein Ritzel oder für ein Ritzelpaket, ausgebildet ist. Bei einer Ausgestaltung der Nabenkupplung als Aufnahme für einen Lagerring oder einen Lagerhalter eines Achslagers ist vorteilhaft, dass die über die Speichen eingeleiteten Zugkräfte auf äußerst kurzem Wege in das Lager eingeleitet werden können, dessen Lagerring oder Lagerhalter in der Nabenkupplung aufgenommen ist. Bei einer alternativen oder zusätzlichen Ausgestaltung der Nabenkupplung als Komponententräger wird eine vorteilhafte Drehmoment- und/oder Krafteinleitung von der am Komponententräger aufgenommenen Komponente über die Nabenkupplung in die Speichen und von dort auf die Felge erzielt. Auch hier ist es vorteilhaft, dass die Faserstränge im Bereich der Nabenkupplung zumindest nahezu keine Unterbrechungen aufweisen und durch die großflächige Anlage an der Nabenkupplung ein geringes Spannungsniveau bei der Übertragung der Kräfte von der jeweiligen Komponente auf die Nabenkupplung und von dort auf die Speichen gewährleistet ist. Dies ist insbesondere dann von Bedeutung, wenn es sich bei der Komponente um eine Bremsscheibe einer Scheibenbremsanlage oder um ein Ritzel oder Ritzelpaket eines Antriebsstrangs handelt. Im Falle einer Bremsscheibe müssen zumindest kurzzeitig hohe Drehmomente, im Falle eines Ritzels oder Ritzelpakets müssen fortlaufend zumindest geringfügig variierende Drehmomente auf einem mittleren Niveau auf die Speichen übertragen werden. Da vorzugsweise vorgesehen ist, dass die Faserstränge die Nabenkupplung zumindest bereichsweise umschlingen, findet bei Einleitung eines Drehmoments auf den Nabenkörper eine Umsetzung in Zugkräfte statt, die zumindest im Wesentlichen in Richtung der jeweiligen Faserstränge ausgerichtet sind, so dass hierdurch eine vorteilhafte Ausnutzung der Belastbarkeit der Faserstränge erzielt werden kann. Ergänzend oder alternativ kann vorgesehen sein, dass der Lagerhalter als Komponententräger ausgebildet ist. Hierbei ist es vorteilhaft, wenn zwischen Lagerhalter und Nabenkupplung eine zumindest im Hinblick auf die Übertragung von Drehmomenten formschlüssige Verbindung, beispielsweise in Form einer Verzahnung, vorgesehen ist.

Vorteilhaft ist es, wenn die Nabenkupplung und der Nabenkörper jeweils zumindest eine Ausnehmung aufweisen, in der jeweils ein Abschnitt des Lagerrings oder des Lagerhalters aufgenommen ist, um eine Zentrierung von Nabenkupplung und Nabenkörper zueinander mittels des Lagerrings oder Lagerhalters zu gewährleisten. Damit können der Lagerring oder der Lagerhalter für eine Zentrierung der Nabenkupplung gegenüber dem Nabenkörper eingesetzt werden, wodurch gegebenenfalls auf weitere Zentrierungsmittel verzichtet werden kann. Dies gilt insbesondere dann, wenn der Lagerring oder der Lagerhalter eine präzise bearbeitete Außenoberfläche aufweisen, wie dies typischerweise bei Außenringen von Kugellagern der Fall ist und für Lagerhalter vorgegeben werden kann. Zusätzlich oder alternativ zur Zentrierungswirkung wird durch ein Zusammenwirken der Ausnehmungen in der Nabenkupplung und im Nabenkörper mit dem Lagerring oder dem Lagerhalter eine vorteilhafte Einleitung von Stützkräften, die in Normalenrichtung zu einer Nabenachse des Nabenkörpers über die Speichen auf die Nabenkupplung und den Nabenkörper eingeleitet werden und die beispielsweise auf die Gewichtskraft des Fahrrads und des Fahrers zurückgehen, erreicht. Dies ist darauf zurückzuführen, dass sich der Lagerring oder der Lagerhalter sowohl an der Nabenkupplung als auch am Nabenkörper abstützen kann und somit als Kraftübertragungselement von den Speichen auf den Nabenkörper dient. Vorzugsweise sind für eine Kraftübertragung zwischen Felge und Nabenkörper wenigstens zwei, einander entgegengesetzt und möglicherweise um die Achse des Nabenkörpers verdreht zueinander angeordnete Speichenanordnungen vorgesehen, die jeweils mittels eines Lagerrings oder eines Lagerhalters mit dem Nabenkörper verbunden sind. Dabei wird ein minimaler Abstand der Nabenkupplungen von einer Ausdehnung des Nabenkörpers längs der Achse des Nabenkörpers und von einer Anordnung von axial wirkenden Anschlägen für den Lagerring oder den Lagerhalter im Nabenkörper bestimmt. Ferner werden die mit den Lagerringen oder Lagerhaltern ausgerüsteten Wälzlager an einer Achse festgelegt, die sich durch den Nabenkörper hindurch erstreckt und die für eine Festlegung des Systemlaufrads an einer Vorderradgabel oder an einer Hinterbauanordnung eines Fahrrads vorgesehen ist. Die Festlegung der Wälzlager an der Achse bestimmt den maximalen Abstand der Wälzlager.

In weiterer Ausgestaltung der Erfindung ist vorgesehen, dass der Nabenkörper ein rohrförmiges Mittelstück mit endseitig daran angeordneten Kopplungsteilen und jeweils an den Kopplungsteilen angeordneten, insbesondere in die Kopplungsteile eingeschraubten, Lagerhaltern umfasst. Durch die separate, modulare Ausgestaltung des Nabenkörpers mit dem zentralen rohrförmigen Mittelstück und den daran aufgenommenen, insbesondere eingesteckten, Kopplungsteilen kann eine vorteilhafte Anpassung des Nabenkörpers an unterschiedliche Einsatzfälle für das Systemlaufrad gewährleistet werden. Beispielsweise kann ein Durchmesser des Nabenkörpers in Abhängigkeit von den verwendeten Lagern, die in den Lagerhaltern aufgenommen werden sollen, ausgewählt werden. Ferner kann vorgesehen werden, eine Einstellung der Speichenspannung durch Anpassung der Erstreckung des Mittelstücks längs einer Rotationsachse für den Nabenkörper vorzusehen. Bei der Montage des Systemlaufrads wird der Nabenkörper seitlich, also quer bzw. orthogonal zur Nabenachse zwischen die einander gegenüberliegend angeordneten Nabenkupplungen geschoben, wodurch diese in einen axialen Abstand zueinander gebracht werden. Hierbei findet der Spannungsaufbau in den Speichen statt, der in einem vorgebbaren Spannungsbereich liegen sollte. Bei zu hoher Speichenspannung kann beispielsweise eine Verkürzung der Erstreckung des Mittelstücks längs der Rotationsachse vorgenommen werden kann, um die Speichenspannung zu reduzieren. Die Kopplungsteile sind vorzugsweise mit einem Steckbereich in das rohrförmige Mittelstück eingesteckt und liegen in axialer Richtung insbesondere mit einem zumindest teilweise umlaufenden Ringbund jeweils an einer gegenüberliegenden, axial ausgerichteten Stirnfläche des Mittelstücks an. Die Kopplungsteile stellen die Verbindung zwischen dem Mittelstück und den Lagerhaltern her, ferner kann vorgesehen werden, dass wenigstens eines der Kopplungsteile als Komponententräger zur Anbringung einer krafteinleitenden Komponente wie beispielsweise einer Bremsscheibe genutzt wird. Ergänzend oder alternativ kann vorgesehen werden, die Lagerhalter in die Kopplungsteile einzustecken oder einzuschrauben, wobei die Lagerhalter auch oder ausschließlich als Komponententräger zur Anbringung einer krafteinleitenden Komponente wie beispielsweise einer Bremsscheibe genutzt werden können.

Bei einer Weiterbildung der Erfindung ist vorgesehen, dass die freien Endabschnitte der Faserstränge für eine zumindest bereichsweise Umschlingung einer Außenoberfläche der Felge, insbesondere für eine stoffschlüssige Festlegung an der Außenoberfläche der Felge, ausgebildet sind. Dabei ist die Umschlingung der Felge durch die Speiche derart vorgesehen, dass die Speiche sich ausgehend von der Nabenkupplung in radialer Richtung nach außen tangential entlang einer Seitenfläche der Felge erstreckt und dann zumindest bereichsweise in den radial außenliegenden Felgenbereich umgelenkt ist. Dieser Felgenbereich bildet die radial außenliegende Stirnfläche der Felge, ist vorzugsweise parallel zur Achse des Nebenkörpers ausgerichtet und dient je nach gewählter Type des am Systemlaufrad anzubringenden Fahrradreifens als Anlagefläche für einen Fahrradschlauch oder einen schlauchlosen Reifen. Vorzugsweise ist die Seitenfläche der Felge derart gegenüber der Achse der Nabe ausgerichtet, dass das Faserbündel aus einem freitragenden Bereich zwischen Nabenkupplung und Felge nur mit einer geringen Krümmung, vorzugsweise krümmungsfrei, in Anlage an die Seitenfläche geführt werden kann. Dies kann beispielsweise dadurch gewährleistet werden, dass die Felge in einer parallel zur Achse des Nabenkörpers ausgerichteten Querschnittsebene zumindest bereichsweise einen im Wesentlichen trapezförmigen oder dreiecksförmigen Querschnitt aufweist. Für einen dreiecksförmigen Querschnitt wird vorzugsweise ein gleichschenkliges Dreieck eingesetzt werden, dessen längste Seiten die Seitenflächen der Felge bestimmen. Weiterhin kann vorgesehen werden, dass die Speichen ausgehend von der Nabenkupplung auf eine der Nabenkupplung abgewandte, also entgegengesetzte Seitenfläche der Felge geführt sind, um eine hohe Seitensteifigkeit für das Systemlaufrad zu erzielen. Hierbei durchsetzen die Speichen ausgehend von der Nabenkupplung eine Mittelebene, deren Flächennormale parallel zur Achse der Nabenkupplung ausgerichtet ist und die ihrerseits den Nabenkörper mittig schneidet. Die Faserstränge der Speichen können stoffschlüssig, beispielsweise durch Einbetten in eine geeignete Matrix und/oder formschlüssig, insbesondere durch Umschlingen eines Gegenhalters, der in eine hinterschnittene Ausnehmung eingesetzt wird, oder kraftschlüssig, insbesondere durch Klemmen zwischen zwei zueinander verstellbare Klemmbacken, unlösbar oder lösbar an der Felge festgelegt werden.

Alternativ ist vorgesehen, die freien Enden der Faserstränge in Ausnehmungen, die in einem Flankenbereich der Felge ausgebildet sind, formschlüssig aufzunehmen, insbesondere in Durchbrüche im Flankenbereich einzuhängen. Bei einer Anbringung der freien Enden der Faserstränge in einem Flankenbereich der Felge, also an einer seitlichen Oberfläche der Felge, die nicht vom Reifen überdeckt wird, sind die Fasern der Faserstränge kürzer als bei einer zumindest teilweisen Umschlingung der Felge, wodurch gegebenenfalls eine Materialersparnis und eine Gewichtsreduzierung erreicht werden kann. Ferner kann dadurch eine günstige Krafteinleitung auf die Felge erzielt werden, da die Krafteinleitung in einem Bereich erfolgt, der in radialer Richtung weiter innenliegend angeordnet ist, wo die Felge eine höhere Stabilität aufweist als in einem radial weiter außenliegenden Bereich. Für eine formschlüssige Anbringung der freien Enden des Faserstränge am Flankenbereich der Felge kann vorgesehen sein, dass die Faserstränge endseitig aufgespreizt oder verdickt, beispielsweise durch endseitiges Einspleissen oder Einlaminieren von kürzeren Faserstücken oder durch endseitiges Umlegen der Faserstrangenden, ausgebildet sind und in korrespondierende Ausnehmungen im Flankenbereich der Felge eingreifen. Die Ausnehmungen können beispielsweise als Vertiefungen, insbesondere als Einprägungen, im Flankenbereich ausgebildet sein. Vorzugsweise sind die Ausnehmungen als Durchbrüche ausgebildet, in die die freien Endbereiche der Faserstränge zunächst eingehängt werden. Anschließend erfolgt durch seitliches Einschieben des Nabenkörpers zwischen die Nabenkupplungen der Spannvorgang für die Speichen, wobei eine Zugkrafteinleitung von den freien Endbereichen der Faserstränge auf die jeweiligen Berandungen der Durchbrüche im Flankenbereich erfolgt.

Zweckmäßig ist es, die Faserstränge in den freien Endbereichen hakenförmig, vorzugsweise mit einem U-förmigen Querschnitt, insbesondere mit wenigstens einem Verbindungssteg zwischen gegenüberliegenden U-Schenkeln, auszubilden. Durch Verwendung einer hakenförmigen Gestaltung für die freien Endbereiche der Faserstränge kann eine vorteilhafte Montage und Demontage der Speichenanordnung an die bzw. von der Felge erreicht werden. Ferner wird durch die hakenförmige Geometrie bereits ohne zusätzliche Maßnahmen eine gewisse Sicherheit gegen eine unerwünschte Trennung von Speichenanordnung und Felge im Belastungsfall, insbesondere bei Auftreffen des Systemlaufrads auf ein Hindernis, erzielt. Bevor es zu einem Aushaken des jeweiligen hakenförmigen Endbereichs des Faserstrangs aus der Felge kommt, muss zunächst eine erhebliche Deformation der Felge und/oder eine erhebliche Überdehnung der in diesem Fall zusätzliche zur Eigenspannung auf Zug belasteten Faserstränge auftreten. Durch die Ausdehnung des Hakens in radialer Richtung kann somit ein wesentlicher Einfluss auf die Belastbarkeit des Systemlaufrads genommen werden. Vorteilhaft ist es, wenn der freie Endbereich des jeweiligen Faserstrangs U-förmig ausgebildet ist, da sich hierdurch bei einfacher geometrischer Gestaltung des Endbereichs eine hohe Stabilität erzielen lässt. Dies gilt insbesondere dann, wenn einander gegenüberliegende U-Schenkel des U-förmigen freien Endbereichs durch einen oder mehrere Stege miteinander verbunden sind. Diese Stege tragen einerseits zur Stabilisierung des hakenförmigen Endbereichs des Faserstrangs bei und können andererseits für eine vorteilhafte Zentrierung des jeweiligen Endbereichs in der zugeordneten Ausnehmung eingesetzt werden.

Hierzu kann in weiterer Ausgestaltung der Erfindung vorgesehen werden, dass in den Ausnehmungen, die zum Einhängen der freien Enden der Faserstränge vorgesehen sind, Vertiefungen zur Aufnahme der Verbindungsstege ausgebildet sind. Mit Hilfe dieser Vertiefungen wird eine zuverlässige Festlegung der hakenförmigen Endbereiche des Faserstränge in Umfangsrichtung der Felge, insbesondere eine Zentrierungswirkung in Umfangsrichtung, erzielt. Die Vertiefungen können beispielsweise als in radialer Richtung nach innen gerichtete Schlitze, insbesondere an einem radial innenliegenden Rand eines jeweiligen Durchbruchs, in dem Flankenbereich der Felge ausgebildet sein.

Bevorzugt sind die freien Enden der Faserstränge jeweils mit einem Sicherungsmittel versehen, das für eine Festlegung des jeweiligen freien Endes in radialer Richtung nach außen ausgebildet ist. Das Sicherungsmittel dient einer Festlegung des freien Endes des Faserstrangs, um nach Durchführung des Spannvorgangs für die Speichenanordnung eine Relativbewegung des freien Endes des Faserstrangs gegenüber der Felge zu verhindern. Beispielsweise kann vorgesehen werden, die freien Enden der Faserstränge mit einem Verbindungsmittel wie einer Schraube, einer Niete oder einem Einlegeteil, das zusätzlich zum freien Ende des Faserstrangs in radialer Richtung außenliegend in den Durchbruch eingebracht, insbesondere eingeclipst wird, gegen Bewegungen in radialer Richtung nach außen zu sichern.

Bei einer vorteilhaften Weiterbildung der Erfindung ist vorgesehen, dass die Felge aus wenigstens zwei Felgenringen gebildet ist, wobei eine Trennebene für die Felgenringe quer zu einer Rotationsachse für die Felge ausgebildet ist. Bei einer derartigen Aufbauweise können die Felgenringe kostengünstig als faserverstärkte Kunststoffteile, insbesondere als Carbonteile, in einem Laminierverfahren hergestellt werden. Eine Verwendung von Formkernen oder Expansionelementen wie Blasschläuchen, wie sie bei der Herstellung von einstückigen Hohlkörpern eingesetzt werden müssen, oder eine Segmentierung der Felge entfällt somit. Ferner kann somit eine lokale Verstärkung der Flankenbereich der Felge im Umfeld der Ausnehmungen, insbesondere der Durchbrüche oder Vertiefungen, in einfacher Weise durch zusätzliche Materiallagen verwirklicht werden.

In weiterer Ausgestaltung der Erfindung sind, vorzugsweise den Ausnehmungen, in den Flankenbereichen der Felge im Felgeninneren jeweils separat ausgebildete, insbesondere generativ hergestellte, Verstärkungselemente zugeordnet. Diese Verstärkungselemente sind vorzugsweise maschinell hergestellt, insbesondere durch Rapid-Prototyping-Vorgänge wie Stereolithographie, Fused Deposition Modelling (FDM) oder Lasersintern von Pulverwerkstoffen und weisen eine dreidimensionale, auf die Krafteinleitung durch die Speichenanordnungen optimierte geometrische Gestaltung auf. Die Verstärkungselemente können vorzugsweise im Bereich der Ausnehmungen in den Felgenflanken im Felgeninneren angeordnet sein. Besonders bevorzugt dienen die Verstärkungselemente zumindest teilweise der Festlegung der freien Endbereiche der Faserstränge und somit auch zur vorteilhaften Kraftübertragung zwischen der Speichenanordnung und der Felge. Ergänzend oder alternativ können die Verstärkungselemente auch hilfreich bei der Montage der Felgenringe zu einer Felge genutzt werden.

In weiterer Ausgestaltung der Erfindung ist vorgesehen, dass die Faserstränge die Nabenkupplung jeweils mit einer Überdeckung von mehr als 70 Grad, vorzugsweise mehr als 90 Grad, besonders bevorzugt mehr als 120 Grad, insbesondere mehr als 140, umschlingen und/oder dass die Faserstränge im Bereich der Nabenkupplung eine Zylinderaußenfläche begrenzen und/oder abseits der Nabenkupplung zumindest bereichsweise wenigstens eine Konusfläche bestimmen, deren Mittelachse konzentrisch zu einer Nabenachse ausgerichtet ist. Durch die vorgesehene Umschlingung der Nabenkupplung durch die Faserstränge wird eine große Kontaktfläche zwischen den Fasersträngen und der Nabenkupplung gewährleistet, so dass eine vorteilhafte Krafteinleitung von den Fasersträngen der Speichen in die Nabenkupplung sichergestellt ist. Ferner kann vorgesehen sein, dass die Faserstränge im Bereich der Nabenkupplung eine Zylinderaußenfläche begrenzen, deren Mittelachse vorzugsweise konzentrisch zur Nabenachse ausgerichtet ist. Hierzu kann vorgesehen sein, dass die Faserstränge im Bereich der Umschlingung der Nabenkupplung zumindest abschnittsweise so ausgerichtet sind, dass die einzelnen Fasern der Faserstränge im Mittenabschnitt in einem Querschnittsbereich angeordnet sind, der in radialer Richtung zur Nabenachse eine geringe und in axialer Richtung zur Nabenachse eine erheblich größere Ausdehnung aufweist, um eine vorteilhafte Einleitung von Querkräften von den Speichen auf die Nabenkupplung und den Nabenkörper und somit eine hohe Seitensteifigkeit für das Systemlaufrad zu gewährleisten. Ferner wird durch die vorstehend beschriebene Umschlingung der Nabenkupplung durch die Faserstränge auch eine vorteilhafte Drehmomentübertragung von der Nabenkupplung und eventuell daran angebrachten Komponenten wie Bremsscheiben, Ritzeln oder Ritzelpaketen auf die Speichen gewährleistet. Dies ist auf die tangentiale Krafteinleitung zwischen den Fasersträngen und der Nabenkupplung zurückzuführen. Besonders vorteilhaft ist es, wenn die Faserstränge im Bereich abseits der Nabenkupplung zumindest bereichsweise eine Konusfläche bestimmen, deren Mittelachse konzentrisch zu einer Nabenachse ausgerichtet ist. Hierdurch wird eine vorteilhafte Aerodynamik für das Systemlaufrad sichergestellt. Vorzugsweise sind Faserstränge in dem freitragenden Bereich zwischen Nabenkupplung und Felge derart angeordnet, dass sie zwischen einer ersten und einer zweiten Konusfläche aufgenommen sind, die längs der Achse des Nabenkörpers voneinander beabstandet sind. Vorzugsweise sind die beiden Konusflächen mit einem sehr geringen Abstand längs der Achse des Nabenkörpers voneinander beabstandet, wodurch sich sehr flache Speichen in der Art von Säbelspeichen ergeben. Besonders vorteilhaft ist es, wenn die Speichenanordnung und die Felge derart aufeinander angepasst sind, dass zumindest eine der Konusflächen, die von den Speichen bestimmt werden, die Felge berührt, insbesondere die Seitenwand der Felge vollflächig berührt und/oder zu dieser abschnittsweise kongruent ist. Sofern die Faserstränge im Mittenabschnitt eine Zylinderaußenfläche begrenzen und bereichsweise eine Konusfläche bestimmen, können die Speichen aufgrund des daraus resultierenden Faserverlaufs bereichsweise als tordiert angesehen werden, womit eine Festigkeitserhöhung einhergeht.

Vorteilhaft ist es, wenn die Speichenanordnung zwei, insbesondere einstückig und/oder als Gleichteile ausgebildete, Speichengruppen umfasst, die jeweils eine Nabenkupplung und mehrere damit verbundene Faserstränge aufweist. Bei einer einstückigen Ausgestaltung einer Speichengruppe sind die Faserstränge und die Nabenkupplung stoffschlüssig miteinander verbunden. Dies kann beispielsweise dadurch realisiert werden, dass die, vorzugsweise als Carbonfasern ausgeführten, Faserstränge mit Hilfe eines harzförmigen Binders mit der, vorzugsweise ebenfalls aus Carbonfasern hergestellten, Nabenkupplung verklebt werden und anschließend ein Aushärten dieser Verklebung unter Zuhilfenahme von Druck und/oder Wärme erfolgt. Besonders vorteilhaft ist es, wenn die Speichenanordnung zwei als Gleichteile ausgebildete Speichengruppen umfasst. Diese Speichengruppen können spiegelbildlich zueinander ausgerichtet an einander entgegengesetzten Endbereichen des Nabenkörpers angeordnet werden und stellen bei geeigneter Befestigung am Nabenkörper sowie an der Felge die gewünschte Stabilität für das Systemlaufrad sicher.

Bevorzugt ist vorgesehen, dass die Nabenkupplungen der Speichengruppen und der Nabenkörper derart aufeinander abgestimmt sind, dass eine Speichenspannung von einer Erstreckung des Nabenkörpers längs einer Nabenachse bestimmt wird. Da die Speichen mit den freien Enden der Faserstränge an der Felge festgelegt werden und dies vorzugsweise durch eine stoffschlüssige Verbindung zwischen der Felge und den Fasersträngen erfolgt, bleibt in diesem Bereich keine Möglichkeit zur Einstellung der Speichenspannung für das Systemlaufrad. Dementsprechend ist es vorteilhaft, wenn die Nabenkupplungen und der Nabenkörper derart aufeinander abgestimmt sind, dass durch eine Veränderung der Erstreckung des Nabenkörpers längs der Nabenachse Einfluss auf die Speichenspannung genommen werden kann. Beispielsweise können Distanzelemente, insbesondere Distanzscheiben, zwischen den Nabenkörper und die jeweilige Nabenkupplung eingeschoben werden, um die Speichenspannung zu erhöhen. Alternativ können für eine Einstellung der Speichenspannung am Nabenkörper und an wenigstens einer Nabenkupplung schräg zur Nabenachse ausgerichtete und zueinander korrespondierende Kontaktflächen ausgebildet sein. Somit kann durch eine relative Verdrehung zwischen Nabenkörper und Nabenkupplung ein Abstand zwischen den jeweils endseitig am Nabenkörper anliegenden Nabenkupplungen eingestellt werden kann, um dadurch die Speichenspannung zu variieren.

Zweckmäßig ist es, wenn die Felge aus mehreren, vorzugsweise durch Steckverbindungen miteinander gekoppelten, besonders bevorzugt mehr als zwei, insbesondere kernfrei hergestellten, Hohlkammersegmenten aus einem Faserverbundwerkstoff gebildet ist. Die Hohlkämmersegmente weisen in einer Querschnittsebene, die die Nabenachse umfasst, einen im Wesentlichen dreieckigen oder rechteckigen Querschnitt auf. Vorzugsweise wird die Felge durch mehr als zwei, insbesondere genau drei, Hohlkammersegmente gebildet. Die Hohlkammersegmente können mit einseitig und/oder einstückig angeformten Muffen in der Art einer Steckverbindung miteinander gekoppelt werden und sind im Fertigzustand des Systemlaufrads vorzugsweise stoffschlüssig miteinander verbunden. Bei einer derartigen Aufbauweise für die Felge ist es möglich, ein komplexes Querschnittsprofil für die Felge bei gleichzeitig geringem Felgengewicht zu realisieren. Die Hohlkammersegmente können beispielsweise als gekrümmte Rohrabschnitte hergestellt werden, die an einer ersten Ende mit einer, vorzugsweise stoffschlüssig angeformten, Steckmuffe versehen sind, die zum Einstecken in einen freien Hohlkämmerquerschnitt eines zweiten Endes eines angrenzenden Hohlkammersegments ausgebildet ist. Besonders vorteilhaft ist es, wenn die Hohlkammersegmente ohne die Verwendung von Kernen aus einem Carbonmaterial hergestellt werden können, da die Verwendung von Kernen stets erhebliche Nacharbeit an den Hohlkammersegmenten erforderlich macht.

Bevorzugt ist vorgesehen, dass die Felge, insbesondere die Hohlkammersegmente, mit lokalen Vertiefungen für eine oberflächenbündige Aufnahme der freien Endabschnitte der Faserstränge ausgebildet sind. Durch diese lokalen Vertiefungen wird sichergestellt, dass die Seitenflächen der Felge und/oder die radial außenliegende Stirnseite der Felge nach Anbringung der Faserstränge, insbesondere durch Verkleben mit den Hohlkammersegmenten, jeweils als rotationssymmetrische Flächen ausgebildet sind, so dass bei einer Anlage eines Bremsgummis und/oder eines Schlauchs oder schlauchlosen Reifens an den Seitenflächen bzw. an der Stirnfläche keine Rundlauffehler auftreten.

In weiterer Ausgestaltung der Erfindung ist vorgesehen, dass die freien Endabschnitte der Faserstränge der Speichenanordnung zwischen der Felge und einem Felgenring aufgenommen sind, wobei der Felgenring stoffschlüssig mit der Felge verbunden ist und/oder aus einem, insbesondere fasergefüllten Kunststoffverbundmaterial hergestellt ist. Der Felgenring dient wahlweise als Reibfläche für Bremsbeläge von Felgenbremsen und/oder durch radial nach außen gerichteten Überstand über die radial außen liegende Standfläche des Systemlaufrads als seitliche Führung für den Fahrradreifen, der seinerseits wahlweise als Drahtreifen für die Verwendung eines separaten Schlauchs, als Schlauchreifen mit integriertem Schlauch oder als schlauchloser Reifen ausgeführt sein kann. Der Felgenring wird vorzugsweise in einem Kunststoffspritzgussverfahren oder in einem Kunststoffpressverfahren hergestellt und umfasst insbesondere eine Füllung aus kurzen Faserstücken und/oder Metallpartikeln zur Gewährleistung einer hohen mechanischen Stabilität und/oder einer vorteilhaften Wärmeabfuhr. Alternativ kann der Felgenring auch als Metallring ausgebildet sein, sofern hohe Anforderungen an Abriebfestigkeit und/oder Wärmetransport gestellt werden.

Eine vorteilhafte Ausführungsform der Erfindung ist in der Zeichnung dargestellt. Dabei zeigt:
- Figur 1: eine perspektivische Darstellung eines Systemlaufrads mit zwei als Gleichteilen ausgeführten Speichengruppen und einer aus drei Hohlkammersegmenten aufgebauten Felge mit randseitig angebrachten Felgenringen,
- Figur 2: eine ebene Darstellung des Systemlaufrads gemäß der Figur 1,
- Figur 3: eine schematische Schnittdarstellung für eine Speiche, die Felgenringe und ein Hohlkammersegment gemäß einem in Figur 2 eingezeichneten Schnittverlauf,
- Figur 4: eine schematische Schnittdarstellung des Nabenkörpers mit eingebauten Wälzlagern,
- Figur 5: eine schematische Schnittdarstellung des in Figur 4 dargestellten Nabenkörpers mit daran angebrachten Speichengruppen,
- Figur 6: eine perspektivische Darstellung einer Speichengruppe,
- Figur 7: eine schematische Schnittdarstellung der Nabenkupplung mit daran angebrachter Speiche,
- Figur 8: eine perspektivische Darstellung eines Hohlkammersegments mit zwei zur Montage vorgesehenen Speichen,
- Figur 9: eine perspektivische Darstellung einer zweiten Ausführungsform eines Systemlaufrads mit zwei als Gleichteilen ausgeführten Speichengruppen, die an einer mit Ausnehmungen versehenen Felge eingehängt sind,
- Figur 10: eine schematische Schnittdarstellung einer zweiten Ausführungsform eines Nabenkörpers mit daran angebrachten Speichengruppen,
- Figur 11: eine Schnittdarstellung des Systemlaufrads gemäß der Figur 10 und
- Figur 12: eine perspektivische Darstellung eines hakenförmig ausgebildeten freien Endbereichs eines Faserstrangs zur Festlegung an einem Verstärkungselement, das zur Aufnahme in der Felge ausgebildet ist.

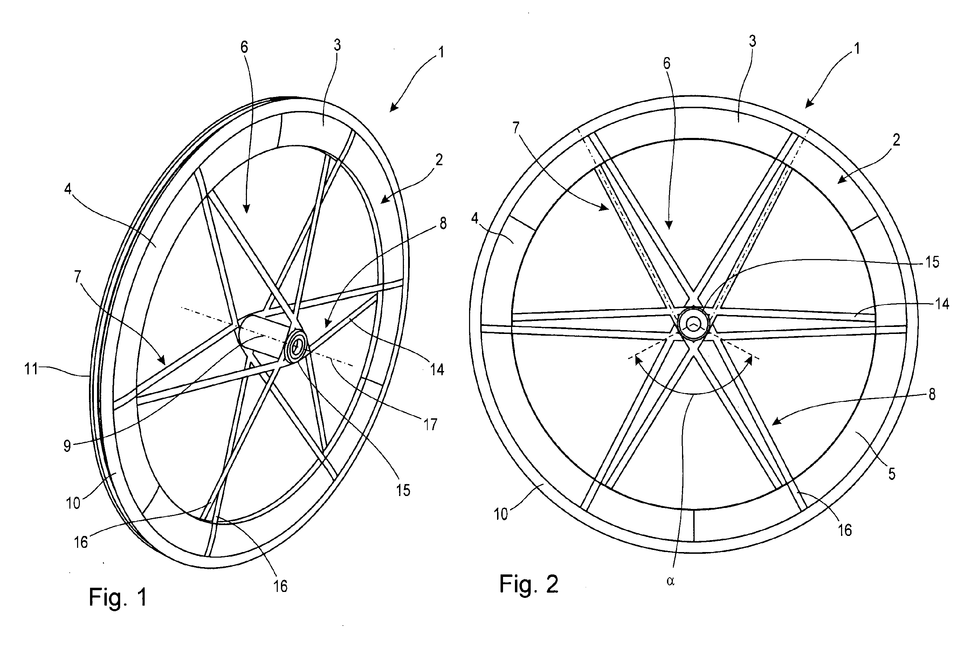

Ein in den Figuren 1 und 2 dargestelltes Systemlaufrad 1, das exemplarisch zur Verwendung als Vorderrad eines nicht näher dargestellten Rennrads vorgesehen ist, umfasst mehrere, insbesondere jeweils als Gleichteile ausgebildete, nachstehend näher beschriebene Komponenten, die vorzugsweise stoffschlüssig zu einem einstückigen Gesamtverbund verbunden sind. Exemplarisch ist vorgesehen, dass das Systemlaufrad zumindest nahezu vollständig aus Carbonfasern hergestellt ist, die in eine geeignete Kunststoff-Matrix aus Duroplast oder Thermoplast oder Elastomer eingebettet werden. Dabei können die Carbonfasern insbesondere in Form von Einzelfasern, Faserbündeln, Geweben, Gestricken oder Gewirken verarbeitet werden.

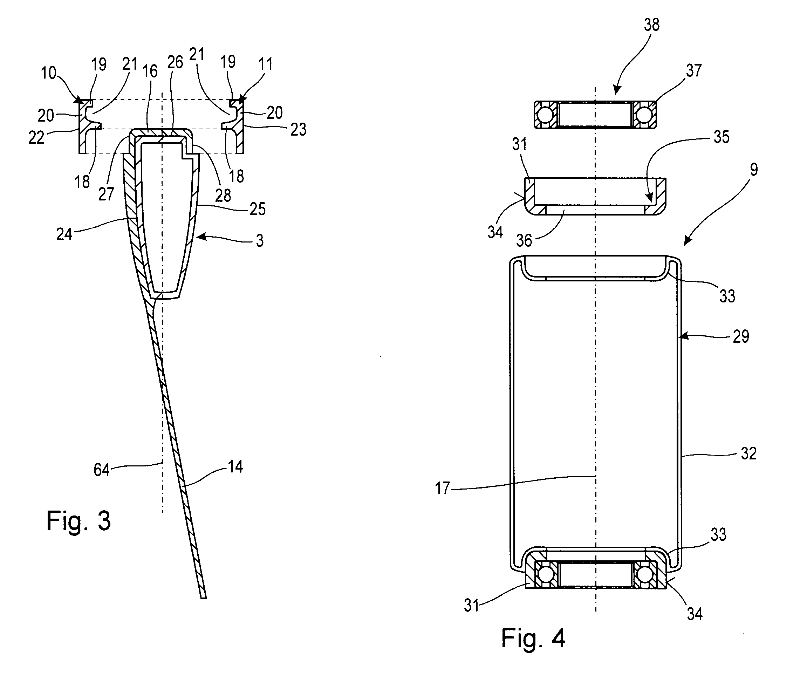

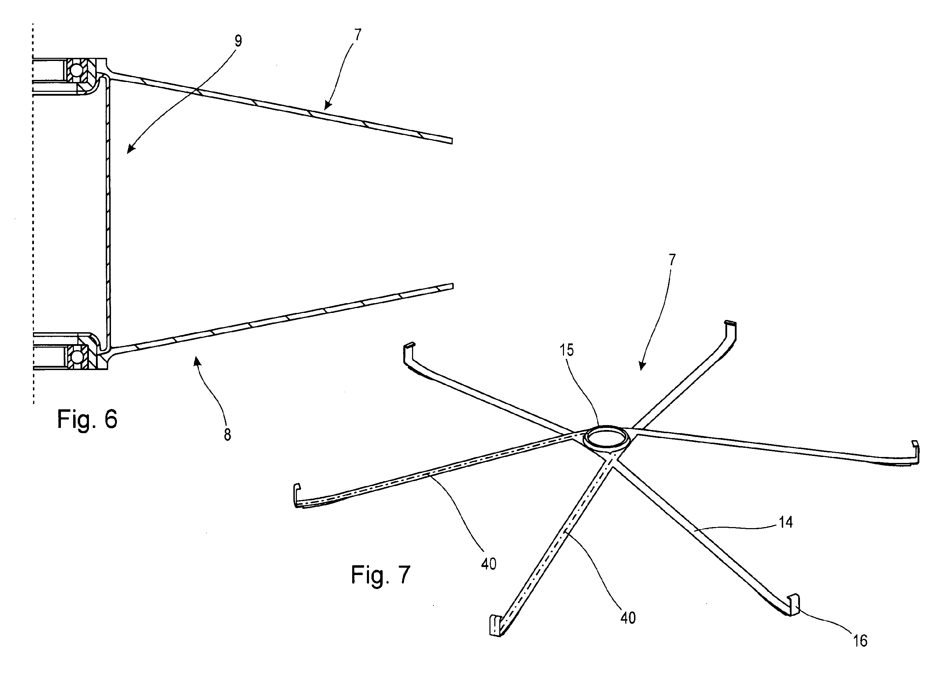

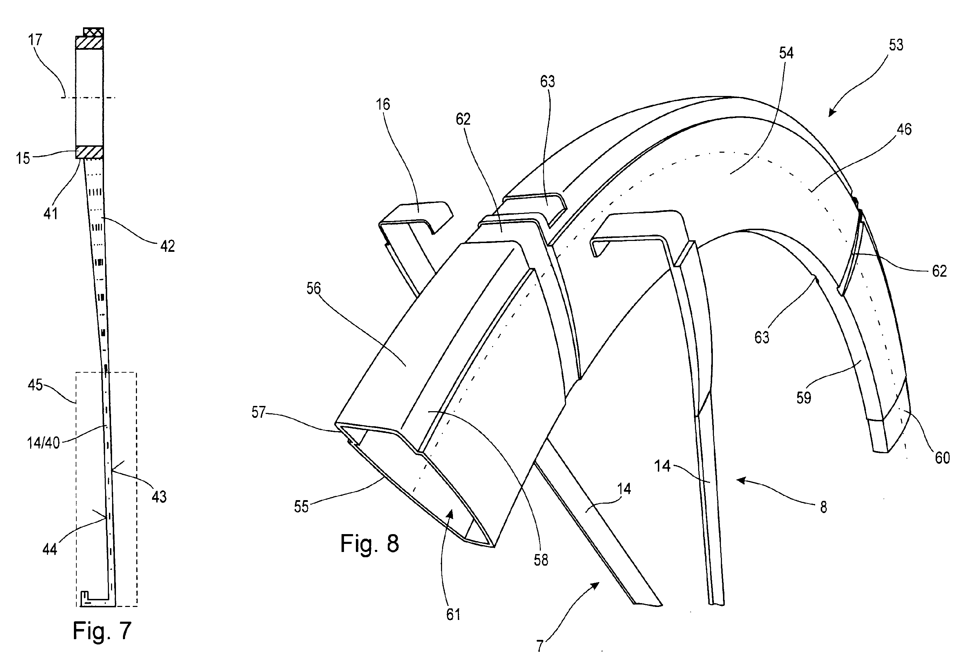

Das Systemlaufrad 1 ist exemplarisch in vier, teilweise mehrteilige ausgebildete Baugruppen aufgeteilt. Die erste Baugruppe ist die Felge 2, die beispielhaft aus insgesamt d jeweils als Gleichteile ausgebildeten Hohlkammersegmenten 3, 4, 5 gebildet ist, wobei eines der Hohlkammersegmente 3, 4, 5 in der Figur 8 näher dargestellt ist und in diesem Zusammenhang auch näher beschrieben wird. Die zweite Baugruppe ist die Speichenanordnung 6, die zwei Speichengruppen 7, 8 umfasst, die ihrerseits in den Figuren 5 und 6 näher dargestellt sind und in diesem Zusammenhang auch näher beschrieben werden. Die dritte Baugruppe ist die Nabe 9, die in den Figuren 4 und 5 näher dargestellt ist und in diesem Zusammenhang auch näher beschrieben wird. Die vierte Baugruppe wird durch die Felgenringe 10, 11 gebildet, die in der Figur 3 näher dargestellt sind und in diesem Zusammenhang auch näher beschrieben werden.

Wie aus den Figuren 1 und 2 entnommen werden kann, umfassen die beiden Speichengruppen 7, 8 jeweils sechs Speichen 14 und eine Nabenkupplung 15, wobei die Anzahl der Speichen 14 lediglich exemplarisch ist und sowohl höher als auch niedriger als dargestellt sein kann. Jeweils zwei Speichen 14 werden durch einen nicht näher dargestellten Faserstrang gebildet, der in einem Mittenbereich die Nabenkupplung 15 umschlingt und dessen freie Enden 16 an der Felge 2, bereichsweise zwischen Felge 2 und einem der Felgenringe 10, 11 festgelegt sind. Bei einer Nutzung des Systemlaufrads 1 als Vorderrad für ein Rennrad gemäß der Ausführungsform der Figuren 1 und 2 wird üblicherweise eine symmetrische Anordnung der Speichengruppen 7, 8 bezogen auf eine normal zu einer Achse 17 der Nabe 9 ausgerichtete Mittelebene angestrebt, so dass diese Speichengruppen 7, 8 als Gleichteile ausgebildet sein können.

Bei einer nicht dargestellten Ausführungsform eines Systemlaufrads ist vorgesehen, das Systemlaufrad als Hinterrad für ein Rennrad zu benutzen, wobei in diesem Fall üblicherweise vorgesehen wird, die Speichengruppen bezogen auf die Mittelebene asymmetrisch zu gestalten, um für diejenige Speichengruppe, die in direkter Kopplung mit einem Ritzel oder Ritzelpaket steht, in vorteilhafter Weise auf die auftretenden Drehmomente anpassen zu können. Auch bei einer Verwendung des Systemlaufrads als Vorderrad für ein Rennrad können asymmetrisch gestaltete Speichengruppen vorgesehen werden, sofern eine Ausrüstung des Systemlaufrads mit einer Scheibenbremse vorgesehen ist, durch die ebenfalls eine asymmetrische Drehmomenteinleitung auf das Systemlaufrad stattfindet.

Bei der in den Figuren 1 und 2 dargestellten Ausführungsform des Systemlaufrads 1 sind die beiden Speichengruppen 7, 8 geringfügig um die Achse 17 zueinander verdreht, so dass die einzelnen Speichen 14 in der in Figur 8 näher gezeigten Weise mit der Felge 2 verbunden werden können. Während bei der dargestellten Ausführungsform des Systemlaufrads 1 nur eine geringe Verdrehung der beiden Speichengruppen 7, 8 zueinander vorgesehen ist, kann bei einer nicht dargestellten Ausführungsform eines Systemlaufrads auch ein größerer Verdrehwinkel der Speichergruppen zueinander vorgesehen werden, beispielsweise ein Verdrehwinkel, der zumindest nahezu einer Winkelhalbierenden zwischen zwei benachbarten Speichen 14 einer Speichengruppe 7, 8 entspricht.

Wie aus der schematischen Schnittdarstellung der Figur 3 entnommen werden kann, sind auch die Felgenringe 10, 11 exemplarisch als Gleichteile ausgebildet. Die Felgenringe 10, 11 werden seitlich an dem Hohlkammersegment 3, insbesondere stoffschlüssig, angebracht. Vorzugsweise werden dadurch die Speichen 14, die ihrerseits das Hohlkammersegment 3 mit ihrem freien Ende 16 zumindest teilweise umschlingen, bereichsweise abgedeckt. Die Felgenringe 10, 11 weisen eine in der Figur 3 gut erkennbare Profilierung mit zwei umlaufenden, in axialer Richtung erstreckten Stützringen 18, 19 auf, die an einem in axialer Richtung erstreckten Basisring 20 angebracht sind. Beide Stützringe 18, 19 erstrecken sich in die gleiche Richtung und sind in axialer Richtung voneinander beanstandet. Dabei dient der Stützring 18 einer stabilen und flächigen Anlage am Hohlkammersegment 3. Der Stützring 19 bildet zusammen mit dem Stützring 18 einen in radialer Richtung wirksamen, zirkular umlaufenden Hinterschnitt 21, der zur Aufnahme eines Drahtwulsts eines nicht dargestellten Drahtreifens vorgesehen ist. Eine exemplarisch eben ausgebildete, kreisringförmige Außenoberfläche 22, 23 der Felgenringe 10, 11 ist beispielsweise als Reibfläche für ein Bremsgummi einer nicht dargestellten Felgenbremsanlage vorgesehen. Vorteilhaft ist es, wenn die Felgenringe 10, 11 aus einem mit kurzen Fasern, insbesondere Glasfasern, Aramidfasern, Naturfasern wie beispielsweise Hanffasern oder Carbonfasern und/oder Metallpartikeln oder Metallfasern gefüllten Kunststoffmaterial in einem Kunststoffspritzgussverfahren oder einem Kunststoffpressverfahren hergestellt sind hergestellt sind. Durch die Faserverstärkung wird eine hohe Stabilität der Felgenringe 18, 19 gewährleistet, die optionale Metallfüllung stellt neben einem vorteilhaften Reibungskoeffizienten auch eine verbesserte Wärmeabfuhr sicher.

Ferner kann der schematischen Schnittdarstellung der Figur 3 auch entnommen werden, dass das freie Ende 16 des als Speiche 14 ausgebildeten Faserstrangs das Hohlkammersegement 3 umgreift. Hierzu ist vorgesehen, dass die Speiche 14 ausgehend von der in Figur 3 nicht dargestellten Nabenkupplung 15 zunächst in Anlage an einer ersten Seitenwand 24 flächig anliegt und mit dieser stoffschlüssig verbunden ist. Ferner ist das freie Ende 16 exemplarisch abgewinkelt ausgebildet, um auch in Anlage an eine radial außenliegende Stirnfläche 26 des Hohlkammersegments 3 zu gelangen. Darüber hinaus ist exemplarisch vorgesehen, dass das freie Ende ein weiteres Mal abgewinkelt ist, um zumindest bereichsweise an einer zweiten Seitenwand 25 anliegen zu können. Darüber hinaus ist bei den Speichen 14, wie sie in den Figuren 3, 6 und 8 näher dargestellt ist, erkennbar, dass eine Anpassung der Geometrie der Speiche an die Geometrie des Hohlkammersegments 3 derart vorgenommen wird, dass sich die Speiche 14 mit dem freien Ende 16 zumindest nahezu vollständig flächenbündig am Hohlkammersegment 3 anbringen lässt. Dabei sind sowohl das Hohlkammersegment 3 als auch das freie Ende 16 der Speiche 14 derart ausgebildet, dass in einem radial außenliegenden Bereich des Hohlkammersegments 3 an den einander entgegengesetzten Seitenflächen 24, 25 jeweils kreisringförmig umlaufende, vorzugsweise ebene, Rücksprünge 27, 28 vorgesehen sind. Diese Rücksprünge 27, 28 dienen zur Aufnahme der Felgenringe 10, 11, die vorzugsweise stoffschlüssig mit dem Hohlkammersegement 3 verbunden werden und damit die freien Enden 16 der Speichen 14 zumindest bereichsweise überdecken.

Die in der Figur 4 dargestellte Nabe 9 umfasst einen exemplarisch dünnwandig ausgeführten Nabenkörper 29, der beispielsweise aus mehreren Lagen von Carbonfaser-Gewebeschläuchen gebildet werden kann und der vorzugsweise rotationssymmetrisch zur Nabenachse 17 ausgebildet ist. Der Nabenkörper 29 weist hierbei einen zentralen zylinderhülsenförmigen Verbindungsabschnitt 32 auf, der jeweils endseitig von einem in radialer Richtung nach innen und in axialer Richtung zurückversetzten, napfartig vertieften Aufnahmeabschnitt 33 begrenzt wird. Der Aufnahmeabschnitt 33 dient als Montagebereich für eine, insbesondere stoffschlüssige, Festlegung eines Aufnahmerings 31, der wahlweise als carbonfaserverstärktes Kunststoffteil oder als Metallteil ausgebildet sein kann und der an einer Außenoberfläche 34 bereichsweise an eine Geometrie des Aufnahmeabschnitts 33 angepasst ist, um eine möglichst große Kontaktfläche zwischen Aufnahmeabschnitt 33 und Aufnahmering 31 zu gewährleisten. Exemplarisch ist die Außenoberfläche 34 abschnittsweise zylindermantelförmig ausgebildet. Ferner weist der Aufnahmering 31 eine Ausnehmung 35 auf, die exemplarisch kreiszylindrisch ausgebildet ist und die zur Aufnahme eines Außenrings 37 eines Wälzlagers 38 vorgesehen ist. Vorzugsweise sind die Ausnehmung 35 und der Außenring 37 derart aufeinander angepasst, dass sich bei der Montage des Außenrings 37 in die Ausnehmung 35 eine Übergangspassung ergibt, wodurch eine exakte Ausrichtung des Wälzlagers 38 gegenüber dem Nabenkörper 29 gewährleistet wird.

Um ferner eine exakte Zentrierung der Nabenkupplung 15 gegenüber der Nabe 9 zu gewährleisten, sind auch die Außenoberfläche 34 des Aufnahmerings 31 und eine korrespondierend ausgebildete, exemplarisch kreiszylindrische, Bohrung 39 in der Nabenkupplung 15 für eine Übergangspassung vorgesehen. Die Anbringung der Nabenkupplung 15 am Nabenkörper 29 ist in der Figur 5 näher dargestellt. Für die Montage der Speichengruppen 7 und 8, die jeweils eine Nabenkupplung 15 umfassen, am Nabenkörper 29 ist vorgesehen, dass die jeweiligen Aufnahmeringe 31 noch nicht mit dem Nabenkörper 29 verbunden sind. Dementsprechend können die bereits an der Felge 2 angebrachten Speichengruppen 7, 8 für eine Montage des Nabenkörpers 29 auseinandergedrückt werden, um sie in Richtung der Nabenachse 17 so weit voneinander zu entfernen, dass der Nabenkörper 29 zwischen die Nabenkupplungen 15 eingeschoben werden kann. Durch die Beabstandung der beiden Nabenkupplungen 15 wird die Spannung in den Speichen 14 eingestellt. Sofern die Speichenspannung nach Montage des Nabenkörpers 29 zwischen die beiden Speichengruppen 7, 8 sich in korrekter Weise einstellen sollte, kann anschließend auf beiden Seiten der jeweilige Aufnahmering 31 in die Bohrung 39 der Nabenkupplung 15 und in den Aufnahmeabschnitt 33 des Nabenkörpers 29 längs der Nabenachse 17 eingeschoben werden. In einem nachfolgenden Schritt kann eine Ausrichtung der Aufnahmeringe 31 vorgesehen werden, um eine konzentrische Anordnung der Wälzlager 38 gegenüber der Nabenachse 17 und einer mit der Nabenachse 17 zusammenfallenden Felgenachse zu gewährleisten. Nach Durchführung der Ausrichtung der beiden Aufnahmeringe 31 können diese stoffschlüssig an der Nabenkupplung 15 und am Nabenkörper 29 festgelegt werden.

Aus der Darstellung der Figur 6 geht eine Speichengruppe 7 hervor, die exemplarisch eine Nabenkupplung 15 und sechs davon ausgehende Speichen 14 umfasst. Dabei ist vorgesehen, dass jeweils zwei Speichen 14 von einem durchgehenden Faserstrang 40 gebildet werden, wie dies durch die Mittellinie in der Figur 6 angedeutet ist. Vorzugsweise sind die Faserstränge 40 jeweils so angeordnet, dass die dadurch gebildeten Speichen 14 unmittelbar benachbart zueinander angeordnet sind, ohne dass dazwischen Speichen 14 vorliegen, die von einem anderen Faserstrang gebildet werden. Damit lässt sich eine vorteilhafte Umschlingung der Nabenkupplung 15 erzielen, die im Falle der Speichengruppe 7 unter der Annahme, dass die Faserstränge 40 in tangentialer Anlage an einer kreiszylindrische Anlagefläche 41 der Nabenkupplung 15 kommen, ungefähr 120 Grad beträgt, wie dies als Winkel α in Figur 2 eingezeichnet ist. Entlang dieses Umschlingungsbereichs kann bei stoffschlüssiger Verbindung des Faserstrangs 40 mit der Nabenkupplung 15 eine vorteilhafte Übertragung von Drehmomenten um die Nabenachse 17 sowie von radial zur Nabenachse 17 wirkenden Kräften stattfinden.

Bei einer nicht dargestellten Ausführungsform einer Speichengruppe sind den Speichen jeweils Fasern mehrerer Faserstränge zugeordnet, so dass auch bei Beibehaltung der Anzahl von sechs Speichen zumindest für einen Teil der Fasern größere Umschlingungswinkel an der Nabenkupplung erreicht werden können.

Aus der schematischen Darstellung der Figur 7 geht hervor, wie die Fasern 42 des jeweiligen Faserstrangs 40, die ausgehend vom exemplarisch mehrfach abgewinkelten freien Ende 16 zunächst zwischen zwei Konusflächen 43, 44 verlaufen, deren Rotationssymmetrieachsen konzentrisch zur Nabenachse 17 ausgerichtet sind. In diesem schematisch eingezeichneten Konusbereich 45 für den Faserstrang 40 wird eine möglichst geringe axiale Erstreckung der Speiche 14 angestrebt, um einen Luftwiderstand der Speiche 14 bei einer Rotation des Systemlaufrads 1 um die Nabenachse 17 möglichst gering zu halten. Am Ende des Konusbereichs 45 werden die Fasern 42 in axialer Richtung aufgefächert und somit die Speichen 14 in diesem Bereich tordiert, um eine möglichst direkte Anlage der Fasern 42 an der vorzugsweise kreiszylindrisch ausgebildeten Anlagefläche 41 der Nabenkupplung 15 zu gewährleisten. Vorzugsweise werden die Fasern 42 derart aufgefächert, dass sie im Mittenbereich des Faserstrangs 40 in einer normal zur Nabenachse 17 ausgerichteten Querschnittsebene zumindest abschnittsweise einem Kreisringsegment folgen.

Durch diese Kombination der Torsion des Faserstrangs 40 und der Auffächerung des Faserstrangs 40 wird die Steifigkeit der Speichenanordnung 7 im Bereich der Nabenkupplung 15 erhöht und eine Krafteinleitung in die Nabenkupplung 15 verbessert. Vorzugsweise ist vorgesehen, dass der Faserstrang 40 längs der Anlagefläche 41 einen in der Figur 7 schematisch dargestellten Querschnitt aufweist, dessen Erstreckung in axialer Richtung größer als in radialer Richtung ist.

Aus der Darstellung der Figur 8 ist schematisch der Aufbau einer Variante des Hohlkammersegments 3 zu entnehmen. Das in der Figur 8 dargestellte Hohlkammersegment 53 weist in Querschnittsebenen, die normal zu einem Kreissegment 46 angeordnet sind, mit Ausnahme eine nachstehend näher beschriebenen Endabschnitts einen konstanten, exemplarisch kastenförmigen Querschnitt auf. Dieser Querschnitt wird im Wesentlichen von den exemplarisch leicht gekrümmt ausgebildeten Seitenwänden 54 und 55, der in radialer Richtung nach außen gewandten, kreisringförmigen Stirnfläche 56, den im Wesentlichen parallel zueinander ausgerichteten, kreisringförmigen Rücksprüngen 57, 58 und der radial nach innen gewandten Innenfläche 59 begrenzt. Die Wandstärke des Hohlkammersegments 53 ist exemplarisch überall gleich gewählt, kann jedoch bei einer nicht dargestellten Ausführungsform bereichsweise variieren, wobei in stärker belasteten Zonen eine größere Wandstärke und in weniger belasteten Zonen eine demgegenüber geringere Wandstärke vorliegt.

Ein in der Figur 8 rein exemplarisch am rechten Ende des Hohlkammersegments 53 angeordneter Steckmuffenabschnitt 60 ist derart ausgebildet, dass er in einen Hohlraum 61 eines benachbarten, nicht dargestellten Hohlkammersegments 53 eingesteckt werden kann. Dabei ist vorzugsweise vorgesehen, dass eine Außenkontur des Steckmuffenabschnitts 60 mit einer Innenkontur des Hohlraums 61 übereinstimmt. Ferner ist vorgesehen, dass die Krümmung des Steckmuffenabschnitts 60 identisch mit der Krümmung des übrigen Hohlkammersegments 53 ist, so dass eine Einsteckbewegung eines ersten Hohlkammersegments 53 in ein zweites Hohlkammersegment 53 auf einer kreisförmigen Bahn erfolgt. Die Hohlkammersegmente 53 werden stoffschlüssig miteinander verbunden und exemplarisch mit einem weiteren Hohlkammersegment 53 zu einer umlaufende Felge 2 ergänzt. Bei einer Aufteilung der Felge 2 in drei Hohlkammersegmente 3 und einer Verwendung einer Speichenanordnung 6, die zwei Speichengruppen 7, 8 mit jeweils sechs Speichen 14 umfasst, können die Hohlkammersegmente 53 als Gleichteile ausgebildet werden. Diese Gleichteilstrategie kann auch für andere Aufteilungen der Felge und andere Speichenanordnungen realisiert werden.

In einem nachfolgenden Schritt werden die Speichen 14 zweier entgegengesetzt zueinander ausgerichteter Speichengruppen 7, 8 mit ihren freien Enden 16 stoffschlüssig an den Hohlkammersegmenten 53 festgelegt. Um nach der Anbringung der Speichen 14, die die Hohlkammersegmente 53 bereichsweise umschlingen, an den Seitenwänden 54 und 55 sowie an der Stirnfläche 55 eine glatte Oberfläche gewährleisten zu können, sind an den Hohlkammersegmenten 53 jeweils lokale Vertiefungen 63, 64 ausgebildet, in die die freien Enden 16 der Speichen 14 oberflächenbündig aufgenommen werden können. Um eine Schwächung der Hohlkammersegmente 53 im Bereich der lokalen Vertiefungen 63, 64 zu vermeiden, kann vorgesehen werden, dass eine Wandstärke der Hohlkammersegmente 53 in diesen Bereichen zumindest einer Wandstärke der den übrigen Bereichen entspricht oder durch innere Verstärkungsmaßnahmen wie beispielsweise zusätzliche Faserlagen lokal erhöht ist.

Vorzugsweise ist vorgesehen, dass die Speichengruppen 7, 8 derart konfiguriert sind, dass die Speichen der ersten Speichengruppe 7 ausgehend von der ersten Nabenkupplung 15 eine in der Figur 3 eingezeichnete Mittelebene 64, die normal zur Nabenachse 17 ausgerichtet ist und das Hohlkammersegment 3 mittig schneidet, durchsetzen und auf einer der Nabenkupplung 15 der ersten Speichengruppe 7 abgewandten Seitenfläche 24 in einer in Figur 3 nicht näher bezeichneten lokalen Vertiefung in Kontakt mit dem Hohlkammersegment 3 treten. In spiegelverkehrter Weise gilt dies dann auch für die Speichen 14 der zweiten Speichengruppe 8.

Bei einer nicht dargestellten Ausführungsform sind die Fasern der Faserstränge an den freien Enden der Speichen zunächst nicht in einer Kunststoff-Matrix aufgenommen, während die übrige Speichengruppe in der Art der Figur 6 ausgebildet ist. Ferner sind die lokalen Vertiefungen an einem zugeordneten Hohlkammersegment derart ausgebildet, dass an der radial außenliegenden Stirnfläche eine gemeinsame Vertiefung gebildet wird. Die Fasern der freien Enden der Speichen werden, insbesondere im Bereich der gemeinsamen Vertiefung der radial außenliegenden Stirnfläche, zunächst parallel zueinander ausgerichtet und vorzugsweise gleichmäßig ineinandergeschoben oder übereinandergelegt, so dass ein Verbund der gegensinnig ausgerichteten Fasern gebildet wird, der anschließend in eine Kunststoff-Matrix eingebettet wird.

Bei einer ebenfalls nicht dargestellten Weiterbildung des Systemlaufrads ist die Anbringung einer zusätzlichen Komponente wie einer Bremsscheibe, eines Ritzels oder eines Ritzelpakets an der Nabe vorgesehen. Dabei kann die jeweilige Komponente an der Nabenkupplung und/oder am Aufnahmering oder am Nabenkörper festgelegt werden. Bei einer Festlegung der Komponente an der Nabenkupplung ist eine unmittelbare Einleitung des Drehmoments in die Speichenanordnung gewährleistet, von wo aus die aus dem Drehmoment resultierenden Zugkräfte in die Felge und somit auf den reibschlüssig und/oder stoffschlüssig angeordneten Reifen übertragen werden können.

Durch die Felgenringe 10, 11 können eventuell vorliegende Ungenauigkeiten hinsichtlich eines radialen Rundlaufs (Seitenschlag) und/oder axialen Rundlaufs (Höhenschlag) der Felge 2 zumindest teilweise korrigiert werden. Dies gilt insbesondere dann, wenn das Systemlaufrad für die Verwendung von Drahtreifen ausgelegt wird, deren an den innenliegenden Reifenflanken eingelassene Drahtstrukturen in die Hinterschnitte 21 der Felgenringe 10, 11 eingreifen.

Bei einer nicht dargestellten Ausführungsform des Systemlaufrads zur Verwendung als Hinterrad kann auch eine Querschnittsgeometrie der Hohlkammersegmente asymmetrisch ausgebildet sein und/oder eine asymmetrische Gestaltung der Nabe und/oder der Nabenkupplungen sowie der Speichen vorgesehen sein.

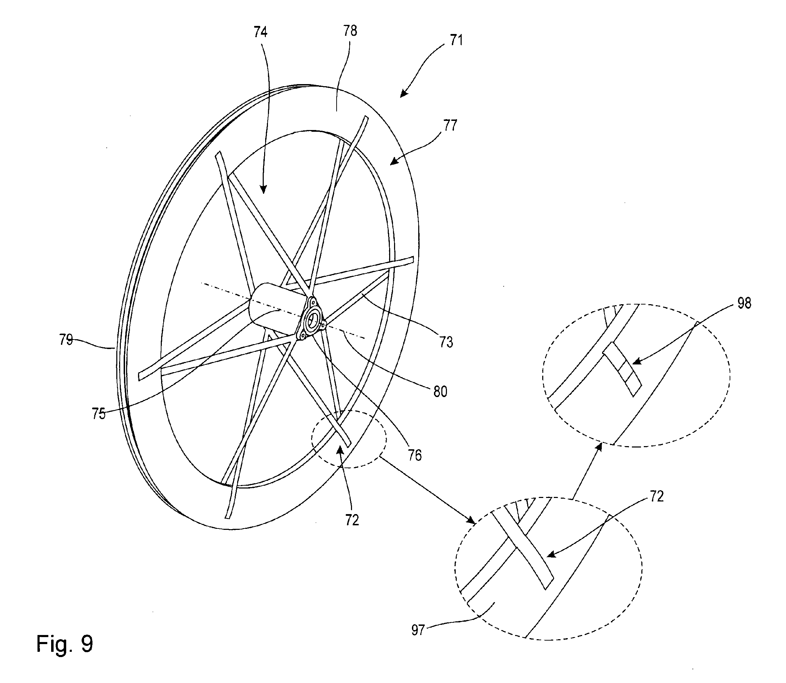

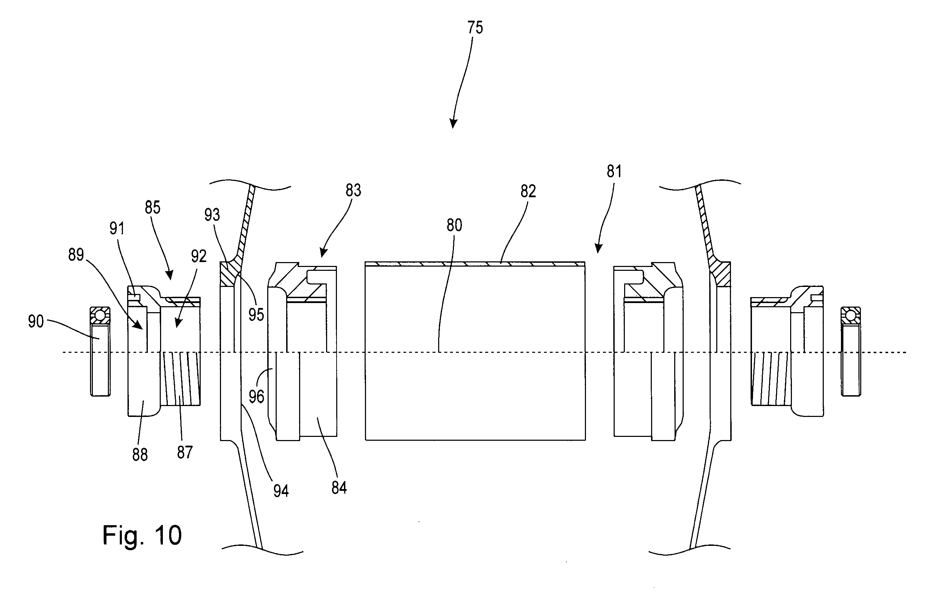

Bei der in Figur 9 dargestellten zweiten Ausführungsform eines Systemlaufrads 71 ist abweichend von der in Figur 1 dargestellten Ausführungsform des Systemlaufrads 1 keine Umschlingung der Felge durch die freien Enden der Faserstränge sondern eine seitliche Verankerung der freien Endbereiche 72 der Faserstränge 73 vorgesehen. Der übrige Aufbau der Speichenanordnung 74 ist in analoger Weise zur Speichenanordnung 6 vorgesehen, die abweichend ausgestalteten freien Endbereiche 72 werden nachstehend näher beschrieben. Ferner weist das Systemlaufrad 71 exemplarisch eine vom Systemlaufrad 1 abweichende Nabe 75 auf, die einen nachstehend näher beschriebenen und von der Nabe 9 abweichenden modularen Aufbau aufweist. Beispielhaft ist die Nabe 75 zur Verwendung mit einer nicht dargestellten Bremsscheibe vorgesehen und weist hierzu eine Montagefläche 76 auf, an der die Bremsscheibe mit Hilfe von ebenfalls nicht dargestellten Schrauben, die in entsprechende Gewindebohrungen 77 eingreifen können oder mittels einer Verzahnungsgeometrie zwischen Bremsscheibe und Nabe 75, festgelegt werden kann. Eine nähere Beschreibung der Nabe 75 erfolgt im Zusammenhang mit der Figur 10.

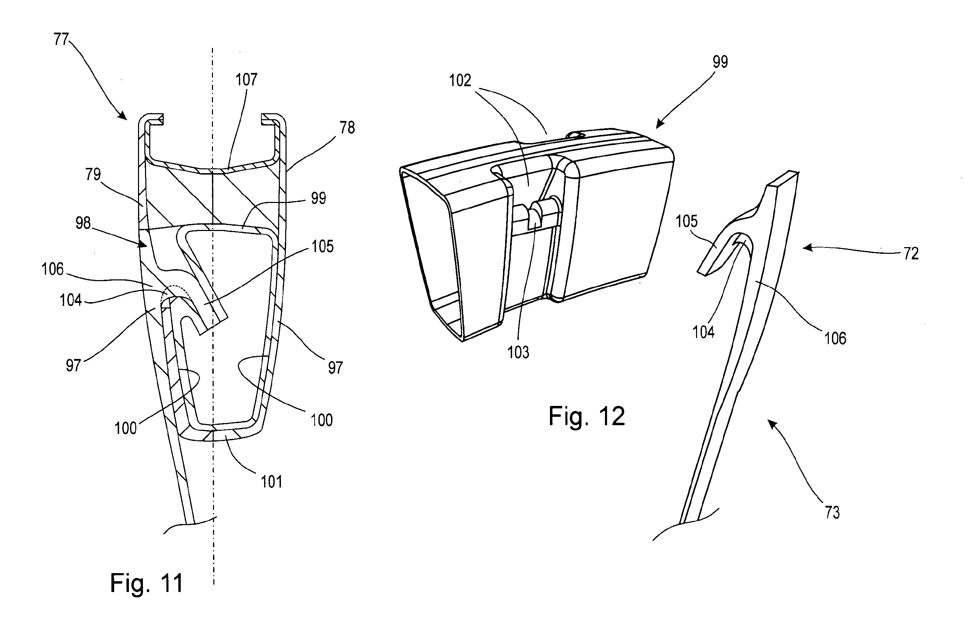

Exemplarisch kann vorgesehen sein, dass die Felge 77 des Systemlaufrads 71 aus zwei in der Figur 11 näher dargestellten Felgenringen 78 und 79 aufgebaut ist, die vorzugsweise als Gleichteile spiegelsymmetrisch zu einer Spiegelebene ausgebildet sind, deren Flächennormale durch die Achse 80 der Nabe 75 gebildet wird. Bei einer derartigen Aufbauweise für die Felge 77 ist es vorteilhaft, dass bei der Herstellung der Felgenringe 78, 79 zumindest weitgehend auf die Verwendung von Formkernen verzichtet werden kann, wie sie bei der Herstellung von Hohlräumen eingesetzt werden, so dass hierdurch die Produktionskosten reduziert und die Prozesssicherheit für den Produktionsablauf erhöht werden kann.

Wie aus der Darstellung der Figur 10 entnommen werden kann umfasst die Nabe 75 einen Nabenkörper 81, der exemplarisch durch ein rohrförmiges Mittelstück 82 und zwei jeweils endseitig in das Mittelstück 82 von einander entgegengesetzten Seiten eingesteckten Kopplungsteile 83 gebildet wird. Vorzugsweise handelt es sich bei dem Mittelstück 82 um einen Rohrabschnitt aus einem metallischen Material oder einem faserverstärkten Kunststoffmaterial. Die Kopplungsteile 83 sind vorzugsweise aus einem faserverstärkten Kunststoffmaterial hergestellt, dienen zur Verbindung des Mittelstücks 82 mit den Lageraufnahmen 85 und weisen jeweils einen Steckabschnitt 84 auf, dessen Außenoberfläche einen Querschnitt aufweist, der an einen Querschnitt einer Innenoberfläche des Mittelstücks 82 angepasst ist, um eine zumindest weitgehend spielfreie Steckverbindung zwischen dem Mittelstück 82 und den Kopplungsteilen 83 zu verwirklichen.

Die Lageraufnahmen 85 sind vorzugsweise zumindest im wesentlichen rotationssymmetrisch aus einem metallischen Werkstoff, einem Kunststoffmaterial oder einem Mischmaterial mit Kunststoff- und Metallanteilen ausgebildet. Die Lageraufnahmen 85 weisen einen ersten Endbereich 87 auf, der mit einem Außengewinde versehen ist, sowie einen zweiten Endbereich 88, der eine exemplarisch zylindrisch ausgebildete Ausnehmung 89 aufweist. Die Ausnehmung 89 dient als Lagerausnehmung zur Aufnahme eines beispielhaft als Rillenkugellager ausgeführten Lagers 90. Ferner ist exemplarisch vorgesehen, dass zirkular, insbesondere konzentrisch, um die Ausnehmung 89 eine ringförmig umlaufende, nutartige Schlüsselausnehmung 91 angeordnet ist, die zum Eingriff eines nicht dargestellten Montagewerkzeugs vorgesehen ist. Exemplarisch ist das Montagewerkzeug in der Art eines Rohrabschnitts ausgebildet, der stirnseitig in axialer Richtung abragende Zähne aufweist, die in nicht näher dargestellte Vertiefungen in der Schlüsselausnehmung 91 eingreifen, um eine drehfeste Kopplung zwischen Lageraufnahme 85 und Montagewerkzeug zu gewährleisten und somit ein Drehmoment auf die jeweilige Lageraufnahme 85 ausüben zu können.Ausgehend von der Ausnehmung 89 ist die Lageraufnahme 85 in axialer Richtung längs der Nabenachse 80 von einer exemplarisch gestuft ausgebildeten Achsausnehmung 92 durchsetzt, die eine Montage einer nicht dargestellten Achse durch die Nabe 75 hindurch ermöglicht. In einem Übergangsbereich zwischen dem ersten Endbereich 87 und dem zweiten Endbereich 88 ist an einer Außenoberfläche der Lageraufnahme 85 ein Durchmessersprung vorgesehen. Dabei ermöglicht der zweite Endbereich 88 mit seinem größeren Durchmesser bei Anbringung der jeweiligen Lageraufnahme 85 an der zugeordneten Kopplungscheibe 83 zumindest eine Festlegung, gegebenenfalls auch eine Zentrierung der ringförmig ausgebildeten Nabenkupplung 93 der Speichenanordnung 84. Für eine vorteilhafte Zentrierung der Nabenkupplung 93 an der Nabe 85 ist exemplarisch vorgesehen, dass die Nabenkupplung 93 an einer dem jeweiligen Kopplungsteil 83 zugewandten Stirnfläche 94 mit einer umlaufenden Eindrehung 95 versehen ist, deren Querschnitt dem Querschnitt einer umlaufenden axialen Ausformung 96 am Kopplungsteil 83 zumindest im wesentlichen entspricht. Dadurch wird bei einem Verschrauben der Lageraufnahme 85 mit dem zugeordneten Kopplungsteil 83 die gewünschte Zentrierungswirkung für die Nabenkupplung 93 erreicht.

Aus den Darstellungen der Figuren 11 und 12 geht hervor, wie der freie Endbereich 72 des Faserstrangs 73, der exemplarisch hakenförmig ausgebildet ist, im Flankenbereich 97 der Felge 77 formschlüssig aufgenommen werden kann. Beispielhaft ist die Felge 77 aus den Felgenringen 78 und 79 aufgebaut, die jeweils als Einzelteile, insbesondere als Gleichteile, hergestellt werden und anschließend stoffschlüssig miteinander verbunden werden. Im Flankenbereich 97 sind jeweils Durchbrüche 98 ausgebildet, wie sie auch aus der Detaildarstellung der Figur 9 bei entfernter Speichenanordnung 74 zu entnehmen sind. Die Durchbrüche 98 werden bei montierter Speichenanordnung 74 von den jeweiligen hakenförmig ausgebildeten freien Endbereichen 72 der Faserstränge 73 durchsetzt und ermöglichen ein Hintergreifen der Felge 77 durch die Speichenanordnung 74.

Um eine vorteilhafte Krafteinleitung von den Fasersträngen 73 in die Felge 77 zu erzielen, ist exemplarisch vorgesehen, im Bereich der Durchbrüche 98 in der Felge 77 Verstärkungselemente 99 anzuordnen, die die von den Fasersträngen 73 eingeleiteten Zugkräfte flächig auf die inneren Flankenbereiche 100 und den Felgeninnenring 101 der beiden Felgenringe 78 und 79 einleiten. Zwischen den Felgenringen 78 und 79 ist ein ringförmig umlaufender Reifenträger 107 angeordnet, der an die Eigenschaften eines zur Verwendung mit dem Systemlaufrad 71 vorgesehenen, nicht dargestellten Reifens angepasst ist, exemplarisch mit einem im Wesentlichen U-förmig profilierten Querschnitt. Der Reifenträger 107 unterstützt eine vorteilhafte Herstellungsweise der beiden Felgenringe 78 und 79, die beispielsweise in einem Laminierverfahren und/oder in einem Pressverfahren, vorzugsweise aus einem faserverstärkten Kunststoff, insbesondere aus carbonfaserverstärktem Kunststoff hergestellt sind.

Um eine zuverlässige Festlegung der freien Endbereiche 72 an der Felge 77 zu gewährleisten ist in dem Verstärkungselement 99 eine schachtartige Ausnehmung 102 ausgebildet, in den der freie Endbereich 72 des jeweiligen Faserstrangs 73 eingreifen kann. Ferner ist randseitig an der schachtartigen Ausnehmung 102 eine zusätzliche Vertiefung 103 vorgesehen, die für eine formschlüssigen Eingriff eines Steges 104 ausgebildet ist, der sich zwischen einem ersten U-Schenkel 105 und einem zweiten U-Schenkel 106 des hakenförmig ausgebildeten, freien Endbereichs 72 des Faserstrangs 73 erstreckt. Dabei kommen dem Steg 104 sowohl die Aufgabe einer Zentrierung des freien Endbereichs 72 an der Felge 77 und dem zugeordneten Verstärkungselement 99 wie auch eine Verstärkungswirkung für die Stabilität des hakenförmig ausgebildeten freien Endbereichs 72 zu.

## Patentansprüche

1. Systemlaufrad für ein Fahrrad, mit einer Felge (2; 77) und mit einem Nabenkörper (29; 81), der in einem Zentrum der Felge (2; 77) angeordnet ist, sowie mit einer Speichenanordnung (6;74), die die Felge (2; 77) mit dem Nabenkörper (29; 81) verbindet, **dadurch gekennzeichnet, dass** die Speichenanordnung (6; 74) aus mehreren stoffschlüssig zu Speichen (14) verbundenen Fasersträngen (40; 73) gebildet ist, die jeweils an einem ersten und an einem zweiten freien Endabschnitt (16; 72) mit der Felge (2; 77) verbunden sind und die jeweils mit einem Mittenabschnitt abschnittsweise an einer Nabenkupplung (15; 93) anliegen, wobei die Nabenkupplung (15; 93) für eine Kraftübertragung zwischen den Fasersträngen (40; 73) und dem Nabenkörper (29; 81) ausgebildet ist.

2. Systemlaufrad nach Anspruch 1, **dadurch gekennzeichnet, dass** die Nabenkupplung (15; 93) als Aufnahme für einen Lagerring (37) oder einen Lagerhalter (31; 85) eines Achslagers (38) und/oder als Komponententräger für eine krafteinleitende Komponente, insbesondere für eine Bremsscheibe, für ein Ritzel oder für ein Ritzelpaket, ausgebildet ist.

3. Systemlaufrad nach Anspruch 2, **dadurch gekennzeichnet, dass** die Nabenkupplung (15) und der Nabenkörper (29) jeweils zumindest eine Ausnehmung aufweisen, in der jeweils ein Abschnitt des Lagerrings (37) oder des Lagerhalters (31) aufgenommen ist, um eine Zentrierung von Nabenkupplung (15) und Nabenkörper (29) zueinander mittels des Lagerrings (27) oder Lagerhalters (31) zu gewährleisten oder dass der Nabenkörper (81) ein rohrförmiges Mittelstück (82) mit endseitig daran angeordneten Kopplungsteilen (83) und jeweils an den Kopplungsteilen (83) angeordnete, insbesondere in die Kopplungsteile (83) eingeschraubte, Lagerhalter (85) umfasst.

4. Systemlaufrad nach einem der vorhergehenden Ansprüche, **dadurch gekennzeichnet, dass** die freien Endabschnitte (16) der Faserstränge (40) für eine zumindest bereichsweise Umschlingung einer Außenoberfläche (24, 25, 26) der Felge (2), insbesondere für eine stoffschlüssige Festlegung an der Außenoberfläche (24, 25, 26) der Felge (2), ausgebildet sind.

5. Systemlaufrad nach einem der Ansprüche 1 bis 4, **dadurch gekennzeichnet, dass** die freien Enden (72) der Faserstränge (73) in Ausnehmungen (98), die in einem Flankenbereich (97) der Felge (77) ausgebildet sind, formschlüssig aufgenommen sind, insbesondere in Durchbrüchen (98) im Flankenbereich (97) eingehängt sind.

6. Systemlaufrad nach einem der vorhergehenden Ansprüche, **dadurch gekennzeichnet, dass** die Faserstränge (73) in den freien Endbereichen (72) hakenförmig, vorzugsweise mit einem U-förmigen Querschnitt, insbesondere mit wenigstens einem Verbindungssteg (104) zwischen gegenüberliegenden U-Schenkeln (105, 106), ausgebildet sind.

7. Systemlaufrad nach Anspruch 5 und 6, **dadurch gekennzeichnet, dass** in den Ausnehmungen (98), die zum Einhängen der freien Enden (72) der Faserstränge (73) vorgesehen sind, Vertiefungen zur Aufnahme der Verbindungsstege (104) ausgebildet sind.

8. Systemlaufrad nach einem der vorhergehenden Ansprüche, **dadurch gekennzeichnet, dass** die Felge (77) aus wenigstens zwei Felgenringen (78, 79) gebildet ist, wobei eine Trennebene für die Felgenringe (78, 79) quer zu einer Rotationsachse (80) für die Felge (77) ausgebildet ist.

9. Systemlaufrad nach Anspruch 8, **dadurch gekennzeichnet, dass**, vorzugsweise den Ausnehmungen (98), in den Flankenbereichen (97) der Felge (77) im Felgeninneren jeweils separat ausgebildete, insbesondere generativ hergestellte, Verstärkungselemente (99) zugeordnet sind.

10. Systemlaufrad nach einem der vorhergehenden Ansprüche, **dadurch gekennzeichnet, dass** die Faserstränge (40; 73) die Nabenkupplung (15; 93) jeweils mit einer Überdeckung von mehr als 70 Grad, vorzugsweise mehr als 90 Grad, besonders bevorzugt mehr als 120 Grad, insbesondere mehr als 140, Grad umschlingen und/oder dass die Faserstränge (40; 73) im Bereich der Nabenkupplung (15; 93) eine Zylinderaußenfläche begrenzen und/oder abseits der Nabenkupplung (15; 93) zumindest bereichsweise wenigstens eine Konusfläche (43, 44) bestimmen, deren Mittelachse konzentrisch zu einer Nabenachse (17; 80) ausgerichtet ist.

11. Systemlaufrad nach einem der vorhergehenden Ansprüche, **dadurch gekennzeichnet, dass** die Speichenanordnung (6; 74) wenigstens zwei, vorzugsweise genau zwei, insbesondere einstückig und/oder als Gleichteile ausgebildete, Speichengruppen (7, 8) umfasst, die jeweils eine Nabenkupplung (15; 93) und mehrere damit verbundene Faserstränge (40; 73) aufweist.

12. Systemlaufrad nach Anspruch 11, **dadurch gekennzeichnet, dass** die Nabenkupplungen (15; 93) der Speichengruppen (7, 8) und der Nabenkörper (29; 81) derart aufeinander abgestimmt sind, dass eine Speichenspannung von einer Erstreckung des Nabenkörpers (29; 81) längs einer Nabenachse (17; 80) bestimmt wird.

13. Systemlaufrad nach einem der vorhergehenden Ansprüche, **dadurch gekennzeichnet, dass** die Felge (2) aus mehreren, vorzugsweise durch Steckverbindungen miteinander gekoppelten, besonders bevorzugt mehr als zwei, insbesondere kernfrei hergestellte, Hohlkammersegmenten (3; 53) aus einem Faserverbundwerkstoff gebildet ist.

14. Systemlaufrad nach Anspruch 13, **dadurch gekennzeichnet, dass** die Felge (2; 77), insbesondere die Hohlkammersegmente (3; 53), mit lokalen Vertiefungen (62, 63) für eine oberflächenbündige Aufnahme der freien Endabschnitte (16; 72) der Faserstränge (40; 73) ausgebildet sind.

15. Systemlaufrad nach einem der vorhergehenden Ansprüche, **dadurch gekennzeichnet, dass** die freien Endabschnitte (16; 72) der Faserstränge (40; 73) der Speichenanordnung (6; 74) zwischen der Felge (2) und einem Felgenring (10, 11) aufgenommen sind, wobei der Felgenring (10, 11) stoffschlüssig mit der Felge (2) verbunden ist und/oder aus einem, insbesondere fasergefüllten, Kunststoffverbundmaterial hergestellt ist.
